## Europäisches Patentamt

## European Patent Office

## Office européen des brevets

(19)

(11) Veröffentlichungsnummer: **0 073 186**

**A1**

(12) **EUROPÄISCHE PATENTANMELDUNG**

(21) Anmeldenummer: **82890121.5**

(22) Anmeldetag: **20.08.82**

(51) Int. Cl.³: **C 25 F 1/00**
**C 25 F 1/06, C 23 G 1/36**
**C 25 C 1/16**

(30) Priorität: **20.08.81 AT 3645/81**

(43) Veröffentlichungstag der Anmeldung:
**02.03.83 Patentblatt 83/9**

(84) Benannte Vertragsstaaten:
**BE CH DE FR GB IT LI LU NL SE**

(71) Anmelder: **VOEST-ALPINE Aktiengesellschaft**
**Friedrichstrasse 4**
**A-1011 Wien(AT)**

(72) Erfinder: **Hans, Walter**
**Burggasse 12**
**A-8652 Kindberg Aumühl(AT)**

(72) Erfinder: **Reiterer, Hans Detlef, Dr.**
**Sandgasse 47**
**A-8010 Graz(AT)**

(72) Erfinder: **Mörth, Wolfgang**
**Kienbergweg 2**
**A-8707 Leoben(AT)**

(74) Vertreter: **Haffner, Thomas M., Dr. et al,**
**Patentanwaltskanzlei Dipl.-Ing. Adolf Kretschmer Dr.**
**Thomas M. Haffner Schottengasse 3a**
**A-1014 Wien(AT)**

(54) Verfahren zum Abbeizen des Zinks von verzinkten Gegenständen und zum Rückgewinnen des abgebeizten Zinks und Vorrichtung zur Durchführung des Verfahrens.

(57) Zum Rückgewinnen des Zinks von verzinkten Gegenständen werden diese Gegenstände in verdünnter Schwefelsäure unter Anlegung einer Spannung von 2 bis 9 V anodisch abgelöst und anschließend aus der $ZnSO_4$-hältigen Lösung nach dem Abtrennen des gegebenfalls in Lösung gegangenen Eisens das Zink elektrolytisch wiedergewonnen. Die Stromstärke während des Ablösevorganges wird hiebei überwacht und die Spannungsquelle wird bei Auftreten einer dem Ablösen von Eisen entsprechenden Änderung der Stromstärke abgeschaltet. Das gegebenenfalls in Lösung gegangene Eisen kann oxidativ, beispielsweise durch Einleiten von Preßluft, nach Einstellen eines pH-Wertes von 3 bis 5 mit Kalziumkarbonat als Oxyd bzw. Oxydhydrat ausgefällt und abgefiltert werden. Die Vorrichtung zur Durchführung des Verfahrens umfaßt eine Elektrolysezelle (1), in welcher das Zink abgelöst wird, ein Reaktionsgefäß (6) für die Abtrennung von Eisen und eine Elektrolysezelle (12) für die Rückgewinnung des Zinks aus der Lösung.

./...

FIG 1

- 1 -

Verfahren zum Abbeizen des Zinks von verzinkten Gegenständen und zum Rückgewinnen des abgebeizten Zinks und Vorrichtung zur Durchführung des Verfahrens.

Die Erfindung bezieht sich auf ein Verfahren zum Abbeizen des Zinks von verzinkten Gegenständen und zum Rückgewinnen des abgebeizten Zinks, sowie auf eine Vorrichtung zur Durchführung dieses Verfahrens.

In Feuerverzinkereien fallen große Mengen an festen zinkhältigen Abfällen, beispielsweise in Form von Zinkasche, Zinkstaub oder Hartzink an. Während die Aufarbeitung derartiger fester zinkhältiger Abfälle in der Regel keine nennenswerten Schwierigkeiten mit sich bringt, sind nur wenige Verfahren bekannt, mit welchen Zinkabbeizen regeneriert werden können bzw. mit welchen das darin enthaltene Zink wiedergewonnen werden kann. Derartige Abbeizlaugen fallen in Feuerverzinkungsanlagen an, wenn fehlverzinktes Verzinkungsgut zum Ablösen des Zinkes mit Säure behandelt wird. Auch die Verzinkungstrommel, Gehänge od. dgl., die bei der Verzinkung in das Zinkbad getaucht werden, müssen in regelmäßigen Abständen abgebeizt werden. Üblicherweise wird die Beizung mit Salzsäure durchgeführt und es entstehen schwer aufarbeitbare HCL-Säurebeizablaugen mit einem Gehalt von etwa 200 bis 300 g Zink und ca. 30 bis 40 g Eisen/1 Ablauge. Beizablaugen solch hohen Eisengehalts müssen mit Kalk neutralisiert werden, wobei der entstandene zinkhältige Schlamm auf Sonderdeponien gelagert werden kann, oder müssen entsprechend der AT-PS 315 603 nach dem sogenannten Sprüh-Rost-Verfahren aufgearbeitet werden, bei welchem durch Zusetzen von Sulfationen zur Eisenbeizlösung sichergestellt werden soll, daß beim Sprührösten der Eisenbeizlösung das Zink als Zinksulfat anfällt. Im erstgenannten Fall gehen hohe Mengen an Zink verloren und die Lagerung der Schlämme bedeutet eine große Umweltbelastung. Für kleinere Verzinkungsanlagen ist es in der Regel nach dem Verfahren gemäß der AT-PS 315 603 nicht möglich, eine wirtschaftliche Rückgewinnung des Zinks durchzuführen.

Die AT-PS 307 849 betrifft ein Verfahren zum Unschädlichmachen der beim Beizen von Eisengegenständen anfallenden Eisensalze, die aus dem Beizbad in fester Form abgetrennt und mit Erdalkalimetallcarbonaten vermischt in einem Drehrohrofen geröstet werden. Das Verfahren der AT-PS 307 849 ist, eben weil die Eisensalze aus dem Beizbad in fester Form abgetrennt werden müssen, nur dann anwendbar, wenn das Beizbad Eisensalze in extrem hoher und nahe der Sättigungsgrenze liegender Konzentration enthält.

Die Erfindung zielt nun darauf ab, ein einfaches und wirtschaftliches Verfahren der eingangs genannten Art zu schaffen, welches unabhängig von der Anlagengröße auch im kleinsten Maßstab wirtschaftlich durchgeführt werden kann und bei welchem nur Beizlaugen mit extrem niedrigem Eisengehalt anfallen. Zur Lösung dieser Aufgabe besteht das erfindungsgemäße Verfahren im wesentlichen darin, daß die abzubeizenden Gegenstände in verdünnter Schwefelsäure anodisch abgebeizt werden und anschließend aus der erhaltenen $ZnSO_4$-haltigen Lösung, nach dem Abtrennen gegebenenfalls in Lösung gegangenen Eisens, insbesondere durch an sich bekanntes oxidatives Fällen desselben, das Zink elektrolytisch abgeschieden wird.

Dadurch, daß von den verzinkten Gegenständen, fast durchwegs Gegenstände aus Eisen, das Zink mittels verdünnter Schwefelsäure abgebeizt wird, wird erreicht, daß nur wenig Grundmetall, meist Eisen, in Lösung geht, da nach dem Ablösen des Zinks von den verzinkten Gegenständen die Badspannung stark ansteigt und damit das Ende des Entzinkens deutlich erkennbar ist. Da die erhaltene Zinksulfatlösung nur wenig Grundmetall als Sulfat, meist Eisensulfat, enthält, kann das Grundmetall ohne große Schwierigkeiten aus der erhaltenen Zinksulfatlösung als Hydroxyd ausgefällt und als solches in einfacher Weise abfiltriert werden. Würden die verzinkten Gegenstände in üblicher Weise durch bloßes Einlegen in verdünnte Schwefelsäure abgebeizt werden, wäre nicht nur zum Abbeizen des Zinks relativ viel Zeit erforderlich, sondern es würden auch nennenswerte Mengen an Grundmetall in Lösung gehen, da bereits von Zink befreite Gegenstände nicht mehr durch das von Grundmetall und darauf befindlichem Zink bebildete Lokalelement kathodisch geschützt wären. Während beispielsweise für die Ablösung einer bestimmten Schichtdicke ohne Anlegung einer Spannung mit verdünnter Schwefelsäure Zeiten von etwa einer Stunde erforderlich wären, kann diese Ablösungszeit bei Spannungen von 2 V wenige Minuten und bei einer Spannung von etwa 6 V auf ungefähr 45 Sekunden gesenkt werden. Bei einer derartigen elektrolytisch unterstützten Auflösung geht aber nun nicht nur Zink in Lösung, sondern auch die Eisen-Zink-Legierungsschicht, welche sich zwischen dem Eisen und dem Zink bei einer Feuerverzinkung ausbildet.

In bevorzugter Weise wird das erfindungsgemäße Verfahren so ausgeführt, daß die verdünnte Schwefelsäure 10 bis 50 g $H_2SO_4$/l enthält, wobei zur Unterstützung der Ablösung die Ablösespannung potentiostatisch auf 2 bis 9 V, insbesondere 6 V, eingestellte werden kann. Durch derartig hohe Spannungen im Vergleich zu dem minimal erforderlichen Patential für die Ablösung läßt sich die Ablösungszeit wesentlich verkürzen.

Um sicherzustellen, daß bei der relativ hohen Spannung kein Eisen des zu verzinenden Gutes in Lösung geht, wird vorzugsweise während der Ablösung bei konstanter Spannung die Stromstärke kontinuierlich überwacht und bei Auftreten einer der Ablösung von Eisen entsprechenden Änderung der Stromstärke die Spannungsquelle abgeschaltet. Bei einer derartigen Verfahrensführung können entsprechend höhere Spannungen gewählt werden, ohne daß die Gefahr einer zu starken Verunreinigung durch Eisenionen auftritt, wodurch sich die Gesamtdauer des Verfahrens wesentlich verkürzen läßt.

Die Abtrennung des gegebenenfalls in Lösung gegangenen Eisens vor der Gewinnungselektrolyse für das Zink erfolgt vorzugsweise durch Einleiten von Sauerstoff, insbesondere von Preßluft, gegebenenfalls nach einer Einstellung eines pH-Wertes von 3 - 5 mit $CaCO_3$, als Oxid bzw. Oxidhydrat. Die entstehenden Schlämme können ohne weiteres abgefiltert werden, wobei die Verwendung von $CaCO_3$ als Neutralisationsmittel zu einem die Koagulation und Ausfällung des Eisenniederschlages unterstützenden Kalziumsulfatniederschlag führt, wodurch die Abtrennung weiter erleichtert wird.

Anschließend kann die von Fe befreite $ZnSO_4$-Lösung bis zum Erreichen einer vorbestimmten Konzentration dem Abbeizschritt rückgeführt werden, wobei lediglich geringe Mengen an Schwefelsäure ergänzt werden müssen.

Die erfindungsgemäße Vorrichtung zur Durchführung dieses Verfahrens ist im wesentlichen gekennzeichnet durch eine erste Elektrolysezelle zum Ablösen von Zn, ein Reaktionsgefäß für die Neutralisation und Fällung von Fe, an welches eine Preßluftleitung angeschlossen ist, ein Filter zum Abtrennen der Fe-hältigen Niederschläge sowie wenigstens eine weitere Elektrolysezelle zur elektrolythischen Zn-Gewinnung aus der der Lösung. Eine geschlossene Verfahrensführung läßt sich dadurch realisieren, daß die erste sowie die weiteren Elektrolysezellen unter Zwischenschaltung des Reaktionsgefäßes und des Filters über Leitungen miteinander verbindbar sind und daß eine Pumpe für die Überführung der Lösungen von der ersten Elektrolysezelle in die weitere(n) Elektrolysezelle(n) vorgesehen ist. Für die Rückführung von Zinksulfatlösung mit für eine Gewinnungselektrolyse zu geringer Zinkionenkonzentration ist erfindungsgemäß eine By-pass-Leitung parallel zu(r) weiteren Elektrolysezelle(n) vorgesehen, welche über steuerbare Ventile an die Leitungen anschließt. Ein vollautomatischer Verfahrensablauf läßt sich in einfacher Weise mit einer Einrichtung zur Ermittlung der $Zn^{++}$Konzentration

- 5 -

der Lösung verwirklichen, welche in Abhängigkeit von der gemessenen Konstellation die steuerbaren Ventile betätigt, so daß bei Erreichen einer für die Gewinnungselektrolyse günstigen Konzentration der Kreislauf der flüssigen Phase über die Elektrolysezellen der Gewinnungselektrolyse geschlossen werden kann.

Die Erfindung wird nachfolgend anhand in der Zeichnung schematische dargestellten Vorrichtung zur Durchführung des Verfahrens näher erläutert. In dieser zeigen Fig. 1 eine schematische Ansicht der erfindungsgemäßen Vorrichtung, Fig. 2 die Lösungspotentiale für das Ablösen der Zinkschichten in Abhängigkeit von der Zeit und Fig. 3 die korrespondierende Veränderung der Stromstärke bei potentiostatischer Ablösung von Zinkschichten.

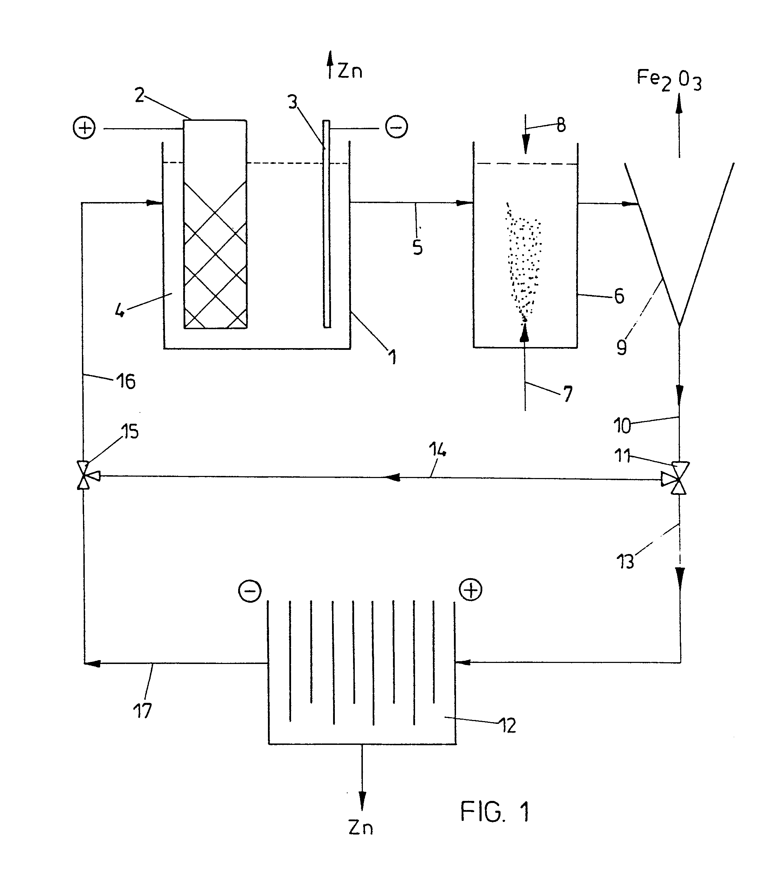

In Fig. 1 ist mit 1 eine Elektrolysezelle bezeichnet. In Körbe 2 wird das zu entzinkende Material eingebracht. Soferne es sich bei dem entzinkenden Material um ganze Stücke, wie Bleche und Anlageteile handelt, können derartige Stücke unmittelbar ohne Verwendung der Körbe in die Elektrolysezelle 1 eingebracht werden. Die Körbe können aus korrosionsbeständigen Materialien, wie beispielsweise Kunststoff, bestehen. In der ersten Elektrolysezelle ist eine zweite Elektrode 3, beispielsweise aus verzinktem Blech, Aluminium oder Stahl vorgesehen. Als Lösungsmittel 4 enthält die Elektrolysezelle eine verdünnte Schwefelsäurelösung mit 10 bis 50 g $H_2SO_4$/l. Zwischen das in den Körben 2 enthaltene zu entzinkende Material bzw. die verzinkten Bleche oder Anlagenteile und die zweite Elektrode 3 wird eine konstante Spannung von etwa 6 V angelegt, wobei zu Beginn eine Stromstärke von etwa 5 A erforderlich ist. Nach Beendigung des Lösungsvorganges wird die Lösung über eine Leitung 5 in ein Reaktionsgefäß 6 übergeführt, welchem von unten die durch den Pfeil 7 angedeutete Preßluft unterhalb des Flüssigkeitsspiegels zugeführt wird, wobei von oben, wie durch den Pfeil 8 ange-

deutet, Kalziumkarbonat zur Einstellung eines pH-Wertes von 3 bis 5 aufgegeben wird. Der gebildete Niederschlag wird in einem Filter 9 abgetrennt, wobei die Lösung über eine Leitung 10 zu einem ersten steuerbaren Ventil 11 gelangt. Die Elektrolysezellen der Gewinnungselektrolyse sind mit 12 bezeichnet, wobei in dieser Gewinnungselektrolyse in konventioneller Weise bei relativ hohen Stromdichten von 300 bis 1000 A/m$^2$ gearbeitet werden kann. Die relativ niedrige Protonenkonzentration der verdünnten Schwefelsäure wirkt sich bei derartig hohen Stromdichten günstig auf die Qualität der Abscheidung des Zinkes aus.

Das erste steuerbare Ventil 11 verbindet die Leitung 10 mit der Leitung 13 zu den Elektrolysezellen 12 der Gewinnungselektrolyse, wenn die Zinkionenkonzentration für eine wirtschaftliche Gewinnung auf elektrolytischem Wege bereits ausreicht. Im anderen Fall wird durch das steuerbare Ventil 11 die Leitung 10 mit einer By-pass-Leitung 14 verbunden, wobei ein weiteres steuerbares Ventil 15 diese By-pass-Leitung mit der Rückführungsleitung 16 zur Elektrolysezelle 1 für die Ablösung des Zinkes verbindet. Wenn die By-pass-Leitung 14 durch das steuerbare Ventil abgeschaltet ist und die Zinksulfatlösung über die Leitung 13 den Elektrolysezellen 12 der Gewinnungselektrolyse zugeleitet ist, ist auch das steuerbare Ventil 15 in eine Stellung gebracht, in welcher die Rückführungsleitung 16 mit der Abflußleitung 17 der Gewinnungselektrolyse verbunden ist. Die über die Abführungsleitung 17 und die Rückführungsleitung 16 in die Elektrolysezelle 1 rückgeführte Säurelösung soll hiebei maximal 0,1 m, vorzugsweise etwa 0,05 m, an ZnSO$_4$ sein, wobei derartige geringe Zinksulfatmengen eine Art autokatalytischen Effekt bei der Ablösung des Zinkes in der Elektrolysezelle 1 ausüben.

- 7 -

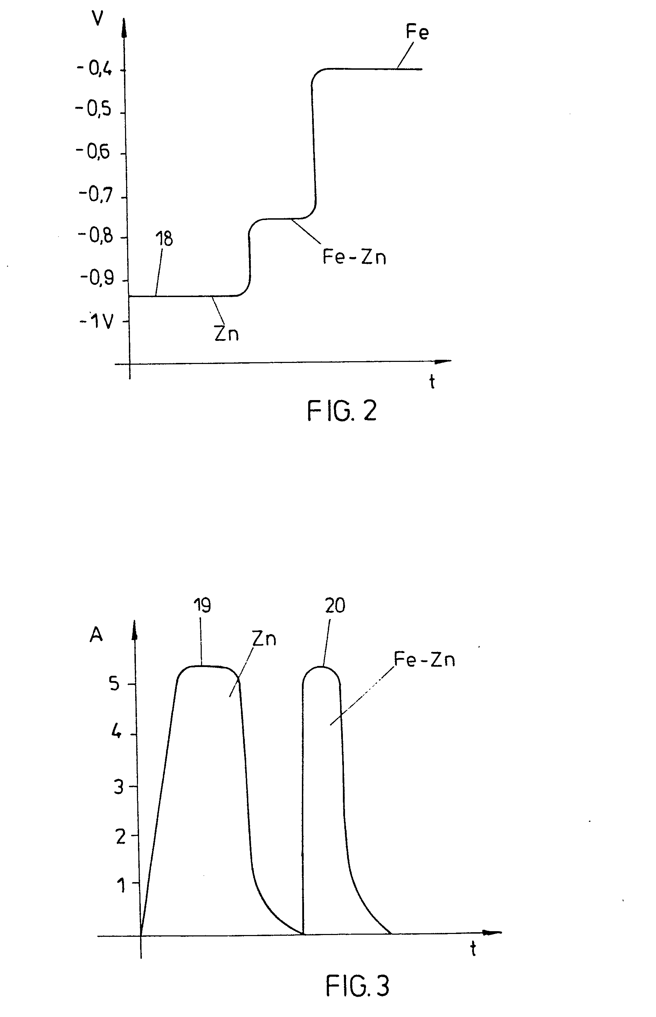

Die Grundlagen für die vollautomatische Steuerung des elektrolytisch unterstützten Ablösungsvorganges ist in den Fig. 2 und 3 erläutert.

In Fig. 2 ist eine Potentialzeitkurve dargestellt, welche für das galvanostatische Ablösen des Zinkes von feuerverzinkten Flächen Gültigkeit hat. Bei einem Ablösepotential von -940 mV ist theoretisch zu Beginn nur eine Ablösung vom reinen Zink zu erwarten. Die Eisen-Zink-Legierungsschicht geht bereits bei -750 mV in Lösung, wobei der entsprechende Wert für Eisen bei etwa -400 mV liegt. Die zur Abszisse parallelen Abschnitte dieser Potentialzeitkurve 18 entsprechen den Mengen an abzulösendem Zink bzw. Eisen-Zink-Legierung.

Bei dem erfindungsgemäßen Verfahren wird nun eine potentiostatische Ablösung vorgenommen, wobei sich je nach der Art des abzulösenden Materiales eine verschiedene Stromstärke einstellt. Dies ist in Fig. 3 dargestellt. Der erste Teil 19 dieser Stromstärke-Zeitkurve entspricht der Ablösung von Zink, wohingegen der zweite Teil 20 der Ablösung von FeZn-Legierungsschicht entspricht. Aus dieser Fig. 3 sind charakteristische Änderungen der Stromstärke bei Erreichen der jeweiligen Phasengrenzen ersichtlich, welche für die vollautomatische Steuerung des erfindungsgemäßen Verfahrens herangezogen werden. Die Höhe und die Breite des Kurvenzuges gemäß Fig. 3 steht wiederum in Zusammenhang mit den abzulösenden Schichtdicken, jedoch sind diese Figuren lediglich als qualitative Erläuterung gedacht.

Ausführungsbeispiel: Kleineisenteile, wie Schrauben, Muttern, Fittinge usw., werden für die Feuerverzinkung in Körbe aus Eisen gefüllt und in das Zinkbad bei etwa $450^{\circ}C$ getaucht. Verzinkungsgut und Körbe legieren oberflächlich mit der Zinkschmelze. Nach einer bestimmten Tauchdauer wird diese Vorrichtung aus dem Bad genommen und in eine Zentrifuge gesetzt. Bei einer Drehzahl von etwa 500 $min^{-1}$ wird über-

schüssiges, an der Oberfläche haftendes Zink abgeschleudert und kann so wiedergewonnen werden. Nach einigen Tauchvorgängen muß der Verzinkungskorb vom Zink befreit werden. Üblicherweise wird der Korb zu diesem Zweck in ein Säurebad getaucht, wobei das Zink langsam abgelöst wird. Im erfindungsgemäßen Beispiel wird dieser Vorgang durch die elektrolytische Entzinkung bewerkstelligt. Zur Entzinkung gelangt ein Verzinkungskorb.

Gesamtoberfläche des Korbes: 56700 cm²

Dicke der Zn-Schicht: 0,02 cm

Volumen der Zn-Schicht: 1134 cm³ Dichte der Zn-Schicht: $\sim$ 7,014

Masse des Zinkes: 8100 g

Abbeizsäure: 45 g $H_2SO_4$/l

Volumen des Entzinkungsbades: 8 m³ = 8000 l $\hat{=}$ 360 000 g $H_2SO_4$ konz.

Konzentration der Entzinkungslösung nach einmaliger Entzinkung:

1,0125 g Zn/l

43,48 g $H_2SO_4$/l

Verbrauch pro Entzinkungsgang: 1,52 g $H_2SO_4$/l

Nach 16 Entzinkungsgängen fällt der Gehalt an $H_2SO_4$ auf 20,7 g/l ab, der Gehalt an Zink steigt auf 16,2 g/l an. Es wird jedoch ein Zn-Gehalt von $\sim$ 80 g/l angestrebt, so daß etwa 80 Entzinkungsschritte durchzuführen sind.

Menge der notwendigen Schwefelsäure: 971,4 kg, wobei die Hauptmenge aus der Elektrolyse rückgeführt wird.

Zeitdauer eines Ablösungsschrittes: stark abhängig von der Bewegung in der Entzinkung, durchschnittlich 10 min.

Gehalt an Fe: vor der Eisenoxidierung: 8 g/l

Gehalt an Fe: nach der Eisenoxidierung: 15 mg/l

Elektrolyse:

Spannung: 2 bis 6 V

Stromstärke: $\sim$ 400 A/m²

5 Kathoden $\hat{=}$ 2000 A

Abscheidezeit: 0,45 h/kg Zn

Konzentration des Elektrolyten vor der Elektrolyse:

$\sim$80 g/l Zn

Konzentration des Elektrolyten nach der Elektrolyse:

$\sim$20 g/l Zn

Durchfluß: 37,5 l/h.

- 10 -

Patentansprüche:

1. Verfahren zum Abbeizen des Zinks von verzinkten Gegenständen und zum Rückgewinnen des abgebeizten Zinks, dadurch gekennzeichnet, daß die abzubeizenden Gegenstände in verdünnter Schwefelsäure anodisch abgebeizt werden und anschließend aus der erhaltenen $ZnSO_4$-haltigen Lösung, nach dem Abtrennen gegebenenfalls in Lösung gegangenen Eisens, insbesondere durch an sich bekanntes oxidatives Fällen desselben, das Zink elektrolytisch abgeschieden wird.

2. Verfahren nach Anspruch 1, dadurch gekennzeichnet, daß eine 10 bis 50 g $H_2SO_4$/l enthaltende verdünnte Schwefelsäure eingesetzt wird.

3. Verfahren nach Anspruch 1 oder 2, dadurch gekennzeichnet, daß die Ablösespannung potentiostatisch auf 2 bis 9 V, insbesondere 6 V, eingestellt wird.

4. Verfahren nach Anspruch 1, 2 oder 3, dadurch gekennzeichnet, daß während des Ablösens des Zinks bei konstanter Spannung die Stromstärke kontinuierlich überwacht wird und daß bei Auftreten einer dem Ablösen von Eisen entsprechenden Änderung der Stromstärke die Spannungsquelle abgeschaltet wird.

5. Verfahren nach einem der Ansprüche 1 bis 4, dadurch gekennzeichnet, daß gegebenenfalls in Lösung gegangenes Eisen vor dem elektrolytischen Abscheiden des Zinks durch Einleiten von Sauerstoff, insbesondere von Preßluft, gegebenenfalls nach einer Einstellung eines pH-Wertes von 3 bis 5 mit $CaCO_3$, als Oxid bzw. Oxidhydrat ausgefällt und abgefiltert wird.

6. Verfahren nach einem der Ansprüche 1 bis 5, dadurch gekennzeichnet, daß die von Fe befreite $ZnSO_4$-Lösung bis zum Erreichen einer vorbestimmten Konzentration dem Abbeizschritt rückgeführt wird.

7. Vorrichtung zur Durchführung des Verfahrens nach einem der Ansprüche 1 bis 6, gekennzeichnet durch eine erste Elektrolysezelle (1) zum Ablösen von Zn, ein Reaktionsgefäß (6) für die Neutralisation und Fällung von Fe, an welches eine Preßluftleitung (7) angeschlossen ist, ein Filter (9) zum Abtrennen der Fe-hältigen Niederschläge sowie wenigstens eine weitere Elektrolysezelle (12) zur elektrolytischen Zn-Gewinnung aus der Lösung.

8. Vorrichtung nach Anspruch 7, dadurch gekennzeichnet, daß die erste (1) sowie die weiteren Elektrolysezellen (12) unter Zwischenschaltung des Reaktionsgefäßes (6) und des Filters (9) über Leitungen (5,10,13,16,17) miteinander verbindbar sind und daß eine Pumpe für die Überführung der Lösungen von der ersten Elektrolysezelle (1) in die weitere(n) Elektrolysezelle(n) (12) vorgesehen ist.

9. Vorrichtung nach Anspruch 7 oder 8, dadurch gekennzeichnet, daß eine By-pass-Leitung (14) parallel zu(r) weiteren Elektrolysezelle(n) (12) vorgesehen ist, welche über steuerbare Ventile (11,15) an die Leitungen (10,13,16,17) anschließt.

10. Vorrichtung nach einem der Ansprüche 7, 8 oder 9, dadurch gekennzeichnet, daß eine Einrichtung zur Ermittlung der $Zn^{++}$-Konzentration der Lösung vorgesehen ist und daß die By-pass-Leitung (14) bei Erreichen einer vorbestimmten Konzentration an $Zn^{++}$-Ionen durch die steuerbaren Ventile (11,15) abschließbar ist.

FIG. 1

**0073186**

FIG. 2

FIG. 3

**Europäisches Patentamt**

## EUROPÄISCHER RECHERCHENBERICHT

Nummer der Anmeldung

| EINSCHLÄGIGE DOKUMENTE | | | EP 82890121.5 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE - A1 - 2 527 949 (MITSUI MI-NING & SMELTING CO. LTD.)<br>* Seite 1, 2. Absatz *<br>-- | 1,5 | C 25 F 1/00<br>C 25 F 1/06<br>C 23 G 1/36<br>C 25 C 1/16 |
| A | DE - A1 - 2 640 096 (DET NORSKE ZINKKOMPANI A/S)<br>* Ansprüche *<br>-- | 1,5 | |
| Y | US - A - 3 905 882 (H.G. HUDSON et al.)<br>* Zusammenfassung; Spalte 1, Beispiele; Ansprüche *<br>-- | 1,3,7 | |
| Y | US - A - 4 042 475 (P.F.A. BIJL-MER)<br>* Zusammenfassung; Tabelle; Ansprüche *<br>---- | 1,4 | RECHERCHIERTE SACHGEBIETE (Int. Cl. ³)<br><br>C 25 F<br>C 25 C<br>C 23 C |

| | |
|---|---|
| X | Der vorliegende Recherchenbericht wurde für alle Patentansprüche erstellt |

| Recherchenort | Abschlußdatum der Recherche | Prüfer |
|---|---|---|
| WIEN | 15-11-1982 | SLAMA |